# EUROPEAN PATENT APPLICATION

(11) **EP 4 636 551 A1**
(43) Date of publication of application: **22.10.2025**
(21) Application number: 23909604.3
(22) Date of filing: 31.10.2023
(51) Int. Cl.: G06F 3/0481

(54) **MESSAGE DISPLAY METHOD AND APPARATUS, ELECTRONIC DEVICE, AND STORAGE MEDIUM**

(30) Priority: 29.12.2022 CN 202211715456
(71) Applicant: GUANGDONG OPPO MOBILE TELECOMMUNICATIONS CORP., LTD., Dongguan, Guangdong 523860 (CN)
(72) Inventor: FU, Qi, Dongguan, Guangdong 523860 (CN)
(74) Representative: Grassi, Stefano
(86) International application number: PCT/CN2023/128591
(87) International publication number: WO 2024/139671

(57) **Abstract**

Disclosed in the embodiments of the present disclosure are a message display method and apparatus, an electronic device and a storage medium. The method is applied to the electronic device. The electronic device includes a foldable device body, a first screen, and a second screen. The first screen and the second screen are arranged on opposite sides of the device body. The second screen can be folded along with the device body. When the device body is in a folded state, the second screen is located on an inner side of the device body. The method includes: when the electronic device is in a folded state, obtaining to-be-processed notification messages; determining a target notification message from the to-be-processed notification messages based on the priorities of the to-be-processed notification messages, and displaying the target notification message on the first screen. By means of the method, a user can conveniently find and view an important notification message with a high priority that he/she is concerned about, thereby improving user experience.

## Description

### CROSS-REFERENCE OF RELATED APPLICATION

This application claims priority to Chinese Patent Application No. 202211715456.7 filed December 29, 2022, the entire contents of which are hereby incorporated by reference for all purposes.

### TECHNICAL FIELD

The present disclosure relates to the field of electronic technology, and particularly to a message display method and apparatus, an electronic device and a storage medium.

### BACKGROUND

With the development of electronic technology, in order to offer a better experience, the screens of electronic devices are getting bigger and bigger. However, as the screen gets bigger, it brings problems such as inconvenience in carrying. Therefore, electronic devices with a foldable screen are gradually emerging and popularizing. The foldable screen may be unfolded or folded by flipping/folding the screen, thereby taking into account both the increase in screen display area and the need for portable use. However, while using electronic devices with a foldable screen, users often receive various notification messages, such as system update prompt messages and application (APP for short) messages (e.g., WeChat messages, phone messages, and SMS messages).

### SUMMARY

In view of the above, the present disclosure proposes a message display method and apparatus, an electronic device and a storage medium to alleviate the above problem.

In a first aspect, embodiments of the present disclosure provide a message display method for an electronic device. The electronic device includes a foldable device body, a first screen and a second screen. The first screen and the second screen are provided on two opposite sides of the device body. The second screen is capable of being folded along with the device body, and when the device body is in a folded state, the second screen is located on an inner side of the device body. The method includes: obtaining to-be-processed notification messages in a folded state of the electronic device; and determining, based on priorities of the to-be-processed notification messages, a target notification message from the to-be-processed notification messages, and displaying the target notification message on the first screen.

In a second aspect, the embodiments of the present disclosure provide a message display apparatus, which runs on an electronic device. The electronic device includes a foldable device body, a first screen and a second screen. The first screen and the second screen are provided on two opposite sides of the device body. The first screen is capable of being folded along with the device body, and when the device body is in a folded state, the first screen is located on an inner of the device body. The apparatus includes a message obtaining unit and a message display unit. The message obtaining unit is configured to obtain to-be-processed notification messages in a folded state of the electronic device. The message display unit is configured to determine, based on priorities of the to-be-processed notification messages, a target notification message from the to-be-processed notification messages, and display the target notification message on the first screen.

In a third aspect, the embodiments of the present disclosure provide an electronic device. The electronic device includes a foldable device body, a first screen, a second screen, one or more processors, and a memory. The first screen and the second screen are provided on two opposite sides of the device body. The second screen is capable of being folded along with the device body, and when the device body is in a folded state, the second screen is located on an inner side of the device body. One or more programs are stored in the memory and configured to be executed by the one or more processors, and the one or more programs are configured to implement the above-mentioned method.

In a fourth aspect, the embodiments of the present disclosure provide a computer-readable storage medium having program codes stored thereon. The program codes, when being executed, cause the above method to be implemented.

### BRIEF DESCRIPTION OF THE DRAWINGS

In order to more clearly illustrate technical solutions in the embodiments of the present disclosure, drawings required for the description of the embodiments will be briefly introduced below. Apparently, the drawings described below are only some embodiments of the present disclosure. For those skilled in the art, other drawings can be obtained based on these drawings without paying any creative work.
FIG. 1 schematically illustrates an application scenario of a message display method as provided in the embodiments of the present disclosure.
FIG. 2 schematically illustrates the application scenario of the message display method as provided in the embodiments of the present disclosure.
FIG. 3 schematically illustrates an electronic device in an unfolded state according to the embodiments of the present disclosure.
FIG. 4 schematically illustrates the electronic device in a folded state according to the embodiments of the present disclosure.
FIG. 5 schematically illustrates an electronic device in a hovering state according to the embodiments of the present disclosure.
FIG. 6 schematically illustrates the electronic device in an unfolded state according to the embodiments of the present disclosure.
FIG. 7 schematically illustrates the electronic device in a folded state according to the embodiments of the present disclosure.
FIG. 8 is a flow chart of a message display method provided in an embodiment of the present disclosure.
FIG. 9 schematically illustrates a first display interface according to the embodiment of the present disclosure.
FIG. 10 is flow chart of a message display method provided in another embodiment of the present disclosure.
FIG. 11 is flow chart of a message display method provided in a further embodiment of the present disclosure.
FIG. 12 is flow chart of a message display method provided in yet a further embodiment of the present disclosure.
FIG. 13 is flow chart of a message display method provided in yet a still further embodiment of the present disclosure.
FIG. 14 is flow chart of a message display method provided in yet a still further embodiment of the present disclosure.
FIG. 15 schematically illustrates prompt information displayed on the first display interface according to the yet a still further embodiment of the present disclosure.
FIG. 16 schematically illustrates a second display interface according to the yet a still further embodiment of the present disclosure.
FIG. 17 schematically illustrates a notification detail display interface according to the yet a still further embodiment of the present disclosure.
FIG. 18 schematically illustrates a reply interface according to the yet a still further embodiment of the present disclosure.
FIG. 19 schematically illustrates the first display interface according to the yet a still further embodiment of the present disclosure.
FIG. 20 illustrates a structural block diagram of a message display apparatus as provided in the embodiments of the present disclosure.
FIG. 21 illustrates a structural block diagram of an electronic device or server provided in the embodiments of the present disclosure, where the electronic device or server is used to execute the message display methods provided in the embodiments of the present disclosure.
FIG. 22 illustrates a storage unit for storing or carrying program codes provided in the embodiments of the present disclosure, where the program codes are used for implementing the message display methods provided in the embodiments of the present disclosure.

### DETAILED DESCRIPTION OF PREFERRED EMBODIMENTS

The technical solutions in the embodiments of the present disclosure will be clearly and comprehensively described below in conjunction with the drawings in the embodiments of the present disclosure. Apparently, the described embodiments are only part of the embodiments of the present disclosure, rather than all the embodiments. All other embodiments, obtained by those of ordinary skill in the art based on the embodiments of the present disclosure without paying any creative work, fall within the scope of protection of the present disclosure.

With the development of electronic technology, in order to offer a better experience, the screens of electronic devices are getting bigger and bigger. However, as the screen gets bigger, it brings problems such as inconvenience in carrying. Therefore, electronic devices with a foldable screen are gradually emerging and popularizing. The foldable screen may be unfolded or folded by flipping/folding the screen, thereby taking into account both the increase in screen display area and the need for portable use.

During research on electronic devices with a foldable screen, the inventor discovered that, while using related electronic devices with a foldable screen, users often receive various notification messages, such as system update prompt messages and APP messages (e.g., WeChat messages, phone messages, and SMS messages). The various notification messages would appear in the notification center by default. As the increase of usage time, many notification messages would be accumulated in the notification center, which is quite messy, seriously affecting the user's ability to find and view important notification messages therefrom, and resulting in a poor user experience.

Therefore, the inventor proposes a message display method and apparatus, an electronic device and a storage medium in the present disclosure. When the electronic device is in a folded state, to-be-processed notification messages are obtained. Then, a target notification message(s) is determined from the to-be-processed notification messages based on priorities of the to-be-processed notification messages, and the target notification message(s) is displayed on the first screen. With this method, on an external screen of an electronic device with a foldable screen, the target notification message(s) is determined from the to-be-processed notification messages based on the priorities of the to-be-processed notification messages, and the target notification message(s) is displayed on the first screen, which facilitates the user to find and view important notification messages with a high priority that he/she is concerned about, thereby improving the user experience.

In an implementation, the method provided in the embodiments may further include operations as follows: when the electronic device is in the folded state, obtaining the to-be-processed notification messages in response to receiving a notification message, where the to-be-processed notification messages include the received notification message, and a historic notification message that was received in past but has not yet been processed.

In an implementation, the method provided in the embodiments may further include operations as follows: while the target notification message is displayed on the first screen, in response to receiving a new notification message, obtaining a priority of the new notification message; and in response to the priority of the new notification message being higher than the priority of at least one target notification message displayed on the first screen, displaying the new notification message on the first screen in such a manner that a target notification message with a lowest priority displayed on the first screen is replaced by the new notification message.

In an implementation, the to-be-processed notification messages include multiple to-be-processed notification messages, and the method provided in the embodiments may further include operations as follows: sorting, based on the priorities of the multiple to-be-processed notification messages, the multiple to-be-processed notification messages in a descending order of the priorities, and obtaining multiple sorted to-be-processed notification messages; and obtaining, from the multiple sorted to-be-processed notification messages, a notification message at a specified sort position as the target notification message.

In an implementation, the method provided in the embodiments may further include operations as follows: obtaining an application type of an application to which each of the multiple to-be-processed notification messages belongs; and determining, based on the application type of the application to which each of the multiple to-be-processed notification messages belongs, the priority of each of the multiple to-be-processed notification messages.

In an implementation, the method provided in the embodiments may further include operations as follows: obtaining a usage frequency of an application to which each of the multiple to-be-processed notification messages belongs within a preset time period; and determining, based on the respective usage frequency, the priority of each of the multiple to-be-processed notification messages.

In an implementation, the method provided in the embodiments may further include operations as follows: obtaining a usage duration of an application to which each of the multiple to-be-processed notification messages belongs within a preset time period; and determining, based on the respective usage duration, the priority of each of the multiple to-be-processed notification messages.

In an implementation, the application type includes a type of system task application, a type of application supporting a flashback key, and a type of chat application, the type of system task application has a higher priority than the type of application supporting a flashback key, and the type of application supporting a flashback key has a higher priority than the type of chat application; the flashback key is configured to, when being triggered, cause a user interface of the application to be displayed.

In an implementation, the method provided in the embodiments may further include operations as follows: in response to an operation performed on the target notification message, entering a notification detail display interface for the target notification message on the first screen, and displaying detailed information of the target notification message on the notification detail display interface.

In an implementation, the method provided in the embodiments may further include operations as follows: in response to detecting that the electronic device being switched from the folded state into an unfolded state, entering an application to which the target notification message belongs.

In an embodiment, the method provided in the embodiments may further include operations as follows: in response to the number of the to-be-processed notification messages being greater than a preset number, displaying a prompt message on the first screen, where the preset number is a maximum number of target notification messages capable of being displayed on the first screen, and the prompt message is configured to prompt viewing of all the to-be-processed notification messages.

In an implementation, the method provided in the embodiments may further include operations as follows: in response to the number of the to-be-processed notification messages being greater than the preset number, displaying, on a second display interface of the first screen, other notification messages than the determined target notification message of the to-be-processed notification messages.

In an implementation, the method provided in the embodiments may further include operations as follows: displaying, on the second display interface of the first screen, the other notification messages than the determined target notification message of the to-be-processed notification messages, based on display priorities of the notification messages in the second screen.

In an implementation, the method provided in the embodiment may further include operations as follows: in response to a first operation performed on a first display interface of the first screen, entering the second display interface on the first screen. The target notification message is displayed on the first display interface of the first screen, where the first display interface includes at least one message notification bar, and each message notification bar is configured to display one notification message.

In an implementation, the method provided in the embodiments may further include operations as follows: determining, based on display permissions of the to-be-processed notification messages and the priorities of the to-be-processed notification messages, a target notification message from the to-be-processed notification messages, and displaying the target notification message on the first display interface of the first screen.

In the following, application scenarios to which the interface display methods provided in the embodiments of the present disclosure are applied are first described in combination with the drawings.

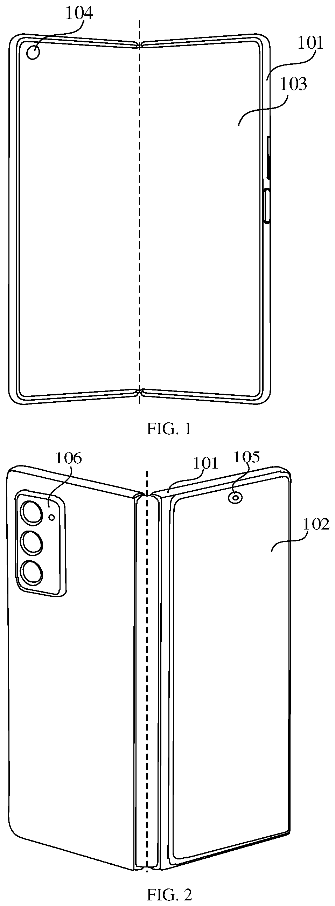

As illustrated in FIG. 1 and FIG. 2, an electronic device involved in the embodiments of the present disclosure include a foldable device body 101, an image acquisition component, a first screen 102 and a second screen 103. The first screen 102 and the second screen 103 are provided on opposite sides of the device body 101. The second screen 103 is capable of being folded along with the device body 101.

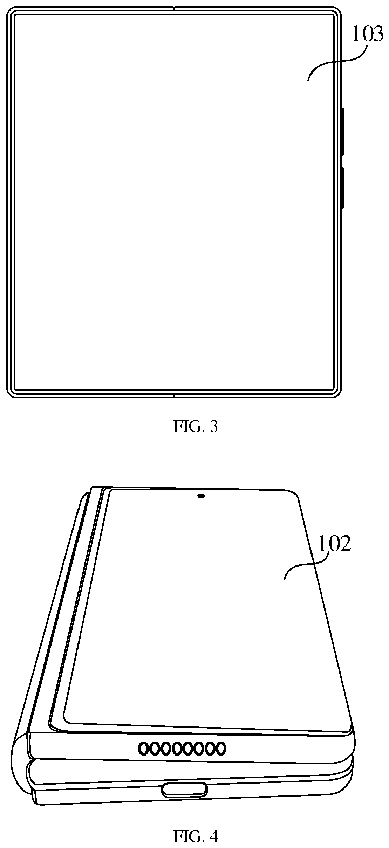

The image acquisition component may include a first front camera 104, a second front camera 105 and a rear camera 106. The first front camera 104 is provided on a side where the second screen 103 is located, and the second front camera 105 is provided at the second screen 103. The rear camera 106 is arranged on a side where the first screen 102 is located, and the rear camera 106 and the first screen 102 are located on both sides of a folding position of the device body 101 (the position is marked by a dotted line in FIG. 1 and FIG. 2). Furthermore, in the embodiments of the present disclosure, the device body 101 of the electronic device may have three device postures. For example, the device body may be in an unfolded state, a folded state, or a hovering state. The unfolded state is illustrated in FIG. 3, the folded state is illustrated in FIG. 4, and the hovering state is illustrated in FIG. 1 and FIG. 2. The hovering state is a state between a fully unfolded state and a fully folded state. Furthermore, the hovering state may be a state of the electronic device when the electronic device is folded to an angle within a preset angle range. The preset angle range may be set to an angle range of 1° to 150°, or an angle range of 30° to 150°, or an angle range of 60° to 120°, which is not specifically limited here.

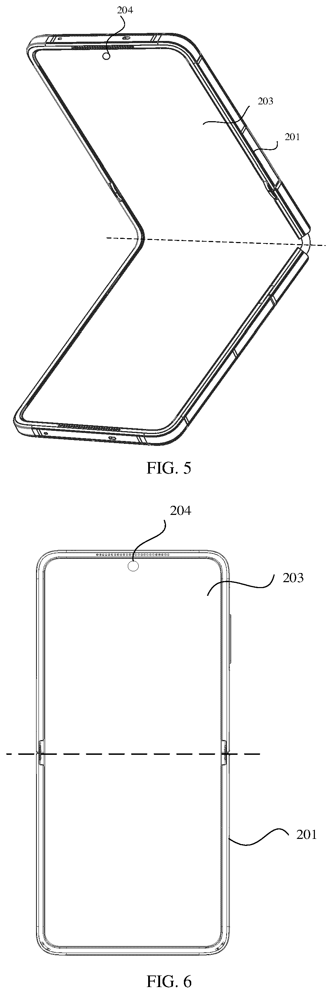

As illustrated in FIG. 5, an electronic device involved in the embodiments of the present disclosure may also include a foldable device body 201, an image acquisition component, a first screen 202 and a second screen 203. The first screen 202 and the second screen 203 are provided on opposite sides of the device body 201. The second screen 203 is capable of being folded along with the device body 201.

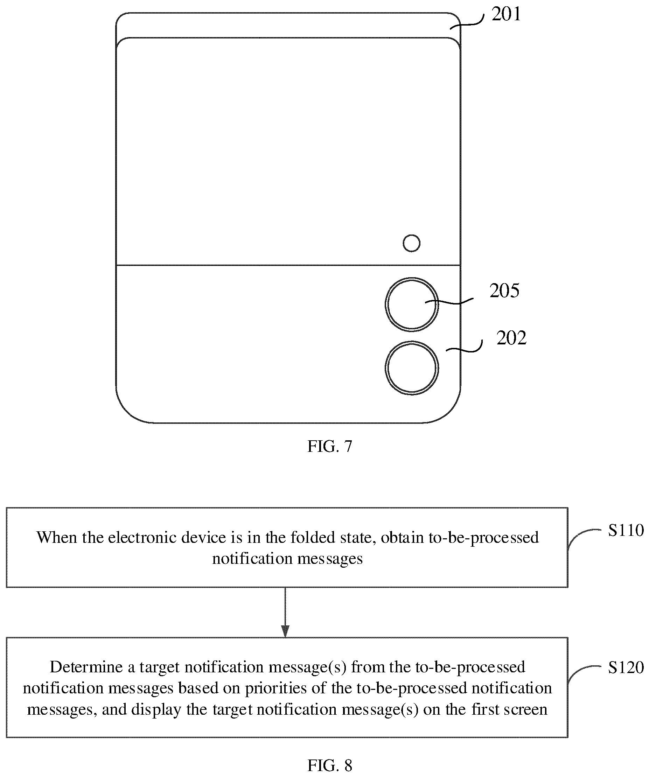

The image acquisition component may include a front camera 204 and a rear camera 205. The front camera 204 is arranged on a side where the second screen 203 is located, and the rear camera 205 is arranged on a side where the first screen 202 is located. Furthermore, in the embodiments of the present disclosure, the device body 201 of the electronic device may also have three device postures. For example, the device body may be in an unfolded state, a folded state, or a hovering state. The unfolded state is illustrated in FIG. 6, the folded state is illustrated in FIG. 7, and the hovering state is illustrated in FIG. 5. The hovering state is a state between the fully unfolded state and the fully folded state. Furthermore, the hovering state may be a state of the electronic device when the electronic device is folded to an angle within a preset angle range. The preset angle range may be set to an angle range of 1° to 150°, or an angle range of 30° to 150°, or an angle range of 60° to 120°, which is not specifically limited here.

In some implementations, in the electronic devices as illustrated in FIG. 1, FIG. 2, FIG. 3, FIG. 4, FIG. 5, FIG. 6 and FIG. 7, the size of the first screen is smaller than the size of the second screen.

The embodiments of the present disclosure will be described in detail below in conjunction with the drawings.

As illustrated in FIG. 8, a message display method is provided in the embodiments of the present disclosure. The method is applied to an electronic device, and the electronic device includes a foldable device body, a first screen and a second screen. The first screen and the second screen are provided on opposite sides of the device body. The second screen is capable of being folded along with the device body. When the device body is in a folded state, the second screen is located on an inner side of the device body. The method includes operations S110-S120 as follows.

At S110, when the electronic device is in the folded state, to-be-processed notification messages are obtained.

In the embodiments of the present disclosure, the to-be-processed notification message is a notification message that has not been processed yet, where not being processed yet may mean that the notification message has not been clicked and viewed, or may mean that the notification message has not been replied to, which is not specifically limited here. Specifically, during the usage of an electronic device by a user, the electronic device may receive notification messages from various applications, such as WeChat messages, phone messages, and SMS messages.

It is notable that the visible display area of each of the first screen and the second screen of the electronic device is different in different device postures. For example, when the device body is in the folded state, the second screen of the electronic device is located at the inner side of the device body, and the second screen is invisible to the user. In this case, the to-be-processed notification message(s) may be displayed through the first screen exposed to the outside. For another example, when the device body is in the unfolded state, the first screen and the second screen are both visible, the electronic device may select one screen from the first screen and the second screen to display the to-be-processed notification message(s) as required, or the first screen and the second screen both may all display the to-be-processed notification messages.

When the electronic device is in the folded state, the to-be-processed notification message(s) need to be displayed through the first screen exposed to the outside.

As an implementation, the electronic device being in the folded state may mean that the initial state of the electronic device is the folded state, or the device state of the electronic device is switched into the folded state from other states, for example, the device state of the electronic device is switched from the unfolded state to the folded state. Once it is detected that the electronic device is in the folded state, the electronic device may obtain in real time to-be-processed notification messages which need to be displayed on the first screen. The to-be-processed notification messages may be sent from different applications. Alternatively, once it is detected that the device state of the electronic device is switched from other states into the folded state, the electronic device may obtain in real time to-be-processed notification messages which need to be displayed on the first screen.

Alternatively, after the device state of the electronic device is switched from the unfolded state or the hovering state into the folded state, to-be-processed notification message(s) originally displayed on the second screen may be obtained, and the to-be-processed notification message(s) originally displayed on the second screen may be displayed on the first screen. In addition, the electronic device may obtain in real time notification message(s) sent by applications in real time after the electronic device is in the folded state, and display the notification message(s) sent by the applications in real time on the first screen.

At S120, a target notification message(s) is determined from the to-be-processed notification messages based on priorities of the to-be-processed notification messages, and the target notification message(s) is displayed on the first screen.

In the embodiments of the present disclosure, the first screen is an external screen of the electronic device, the priority of the notification message may be set based on a preset rule, and the target notification message is a high-priority notification message that is determined from the to-be-processed notification messages and that requires immediate processing by the user. A high-priority notification message requiring immediate processing indicates that the notification message is time-sensitive and will not be retained for a long time.

It is notable that, after the electronic device obtains the to-be-processed notification messages, the electronic device may determine, based on a preset display rule, how to display the obtained to-be-processed notification messages.

As an implementation, the priorities of the to-be-processed notification messages are obtained, and based on the priorities of the to-be-processed notification messages, the to-be-processed notification messages are displayed on the first screen.

Specifically, when the electronic device is in the folded state, after the electronic device obtains all to-be-processed notification messages, the electronic device may first obtain the priority of each to-be-processed notification message, and display all the to-be-processed notification messages on the first screen based on the priorities of the individual to-be-processed notification messages. When all the to-be-processed notification messages are displayed on the first screen, all the to-be-processed notification messages may be displayed in order of priority from high to low.

Furthermore, due to the limitation of the size of the first screen, the number of to-be-processed notification messages that can be displayed on the first screen is limited. Therefore, the target notification message(s) may be determined from the to-be-processed notification messages based on the priorities of the to-be-processed notification messages, and displayed on the first screen.

Specifically, when the electronic device is in the folded state, after the electronic device obtains the to-be-processed notification messages, the electronic device may obtain the priority of each to-be-processed notification message, and then determine, based on the priorities of the individual to-be-processed notification messages, a preset number of high-priority notification messages as the target notification message(s) from all the obtained to-be-processed notification messages, and then display the target notification message(s) on the first screen. The preset number may be a preset maximum number of notification messages that can be displayed on the first screen.

As another implementation, the displaying the target notification message in the first screen may include: displaying the target notification message(s) in a first display interface of the first screen.

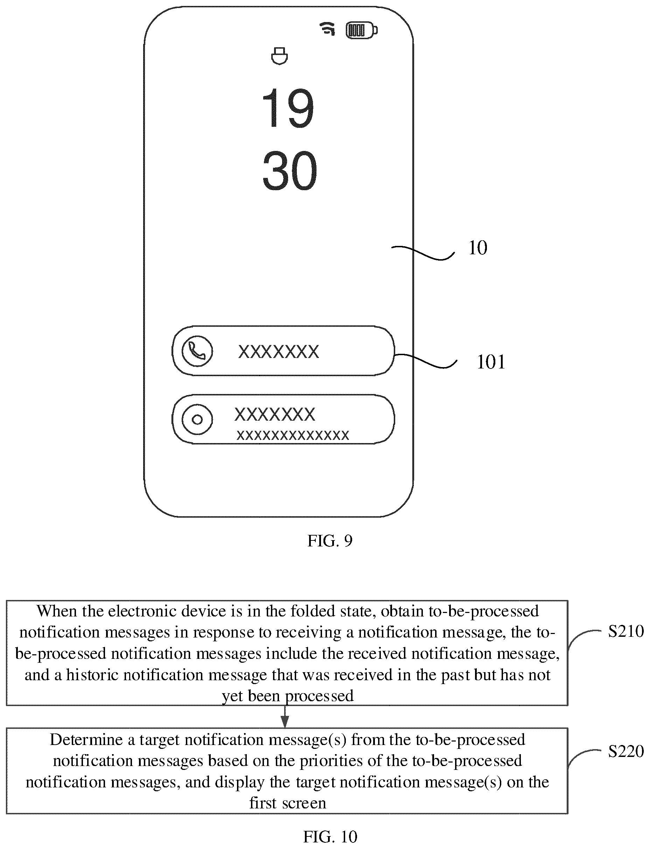

The first display interface is a home page interface of the external screen, that is, the first display interface may be a lock screen interface of the external screen. The first display interface may include at least one message notification bar, and each message notification bar may display one notification message. Furthermore, when a notification message is displayed in the message notification bar, information such as an icon of the application to which the notification message belongs, a receiving time at which the notification message is received, and a sender who sends the notification message may be displayed. Exemplarily, a first display interface 10 is schematically illustrated in FIG. 9. In FIG.9, the first display interface includes multiple message notification bars 101, and each message notification bar includes information such as the icon of the application to which the notification message belongs, the receiving time at which the notification message is received, and the sender who sends the notification message. Optionally, the icon of the application may be an icon of a chat application, such as WeChat, QQ and other chat applications; it may also be an icon of other types of applications that can send/reply messages, or it may also be an icon of an application with a spoiler notification function, which is not specifically limited here.

Furthermore, due to the limitation of the size of the first screen, the number of to-be-processed notification messages which can be displayed in the first display interface of the first screen is limited. Therefore, the target notification message(s) may be determined from the to-be-processed notification messages based on the priorities of the to-be-processed notification messages, and displayed in the first display interface of the first screen.

Specifically, when the electronic device is in the folded state, after the electronic device obtains the to-be-processed notification messages, the electronic device may obtain the priority of each to-be-processed notification message, then determine, based on the priorities of the individual to-be-processed notification messages, a preset number of high-priority notification messages as the target notification message(s) from all the obtained to-be-processed notification messages, and then display the target notification message(s) in the first display interface of the first screen. The preset number may be a preset maximum number of notification messages that can be displayed on the first screen.

In some implementations, since the number of the obtained to-be-processed notification messages may sometimes exceed the maximum number of notification messages that can be displayed in the first display interface, other notification messages than the determined target notification message(s) of the to-be-processed notification messages may be displayed in a second display interface of the first screen. The second display interface is a notification center of the first screen, and all the other to-be-processed notification messages than the determined target notification message(s) may be seen on the second display interface.

It is notable that the size of the first screen of the electronic device is relatively small, and notification messages which are time-sensitive and will not be retained for a long time are usually displayed in the first display interface of the first screen, so that the user may first see these notification messages which are time-sensitive and will not be retained for a long time and process them immediately. Therefore, the priorities of those notification messages which are time-sensitive and will not be retained for a long time would set to be relatively high for the first screen. The size of the second screen of the electronic device is much larger than the size of the first screen, thus more notification messages may be displayed on the second screen. In this case, the user may set the priorities of the notification messages as required. Therefore, the display priority of a notification message in the first screen may be different from the display priority of the same notification message in the second screen.

Furthermore, for displaying to-be-processed notification messages in the second display interface of the first screen, the display priorities of the to-be-processed notification messages in the second screen may be obtained, and the other to-be-processed notification messages than the determined target notification message(s) are displayed in the second display interface of the first screen based on the display priorities of the notification messages in the second screen. For example, a notification message with a high priority is displayed in an expanded form (i.e., the icon of the source of the notification message and the content of the notification message are displayed separately) at a top position of the second display interface, and notification messages with a general priority are displayed in a folded form (i.e., the icons of the sources of the notification messages are merged, and contents of the notification messages are displayed in a collapsed form) at a non-top position, so that the user can conveniently find and view important notification messages with a high priority that he/she is concerned about. When the user clicks on a notification message displayed in the folded form, the notification message displayed in the folded form may be switched to an expanded form for display.

In the embodiments of the present disclosure, the priorities of the notification messages may be determined based on the application to which each notification message belongs, or may be determined based on a usage frequency of the application to which each notification message belongs within a preset time period, or may also be determined based on the receiving times of the notification messages.

As one implementation, the priorities of the notification messages may be determined based on the application to which each notification message belongs. Specifically, the priorities of different applications may be set in advance. After the to-be-processed notification messages are obtained, the priority of the application to which each to-be-processed notification message belongs may be obtained first, and then the priority of each notification message may be determined based on the priority of the corresponding application. Furthermore, multiple notification messages belonging to a same application may be obtained sometimes. In this case, the priorities of the multiple notification messages belonging to the same application may be determined based on the receiving times of the multiple notification messages.

As another implementation, the priorities of the notification messages may be determined based on the usage frequency of the application to which each notification message belongs within a preset time period. Specifically, after the to-be-processed notification messages are obtained, the application to which each to-be-processed notification message belongs may be obtained, and then the usage frequency of the corresponding application within the preset time period may be obtained, thereby determining the priority of the corresponding notification message. The higher the usage frequency of an application within the preset time period, the higher the priority of its corresponding notification message. Also, multiple applications may have a same usage frequency within the preset time period sometimes. In this case, the priorities of multiple to-be-processed notification messages corresponding to the multiple applications may further be determined based on the receiving times of the multiple to-be-processed notification messages.

Furthermore, in the case where the priorities of the notification messages are determined based on the usage frequency of the application to which each notification message belongs within the preset time period, for different usage frequency ranges, corresponding priority levels may be set in advance. As such, the priority of a notification message may be determined based on a usage frequency range in which the usage frequency of the corresponding application within the preset time period is located. Exemplarily, for example, the priority levels include a first priority, a second priority, a third priority, and a fourth priority. The first priority is higher than the second priority, the second priority is higher than the third priority, and the third priority is higher than the fourth priority. The usage frequency range corresponding to the fourth priority is [0, 5], the usage frequency range corresponding to the third priority is (5, 15], the usage frequency range corresponding to the second priority is (15, 30], and the usage frequency range corresponding to the first priority is (30, ∞]. If the to-be-processed notification messages include message 1, message 2 and message 3, the usage frequency of the application corresponding to message 1 within the preset time period is 25, the usage frequency of the application corresponding to message 2 within the preset time period is 10, and the usage frequency of the application corresponding to message 3 within the preset time period is 3, then it may be determined that the priority of message 1 is the second priority, the priority of message 2 is the third priority, and the priority of message 3 is the fourth priority. Further, it may be determined that the priority of message 1 is higher than the priority of message 2, and the priority of message 2 is higher than the priority of message 3.

As another implementation, the priorities of the notification messages may be determined based on the receiving times at which the notification messages are received. Specifically, after the to-be-processed notification messages are obtained, the receiving time of each to-be-processed notification message is obtained. The later the receiving time, the higher the priority of the corresponding to-be-processed notification message; conversely, the earlier the receiving time, the lower the priority of the corresponding to-be-processed notification message.

In some implementations, the priorities of the notification messages may also be determined based on a usage duration of the application to which each notification message belongs within a preset time period. Specifically, after the to-be-processed notification messages are obtained, the application to which each to-be-processed notification message belongs is obtained, and the usage duration of the corresponding application within the preset time period is obtained, then the priority of the corresponding notification message is determined. The longer the usage duration of an application within the preset time period, the higher the priority of its corresponding notification message. Also, multiple applications may have a same usage duration within the preset time period sometimes. In this case, the priorities of multiple to-be-processed notification messages corresponding to the multiple applications may further be determined based on the receiving times of the multiple to-be-processed notification messages.

Furthermore, similarly, in the case where the priorities of the notification messages are determined based on the usage duration of the application to which each notification message belongs within the preset time period, for different usage duration ranges, corresponding priority levels may be set in advance. As such, the priority of a notification message may be determined based on the usage duration range in which the usage duration of the corresponding application within the preset time period is located.

In the embodiments of the present disclosure, it is notable that some notification messages are not allowed to be displayed on the first screen. Therefore, the determining, based on the priorities of the to-be-processed notification messages, the target notification message from the to-be-processed notification messages and displaying the target notification message on the first screen, includes: determining, based on display permissions of the to-be-processed notification messages and the priorities of the to-be-processed notification messages, a target notification message from the to-be-processed notification messages, and displaying the target notification message on the first display interface of the first screen.

The display permission of a to-be-processed notification message may include display allowed and display disallowed. If the display permission of a to-be-processed notification message is display allowed, the notification message may be displayed in the first display interface of the first screen; if the display permission of the to-be-processed notification message is display disallowed, the notification message will not be displayed in the first display interface of the first screen. When the display permissions of the to-be-processed notification messages are display allowed, the electronic device determines the target notification message(s) from the to-be-processed notification messages based on the priorities of the received to-be-processed notification messages, and displays the target notification message(s) in the first display interface of the first screen based on a certain order and display manner. For example, the target notification messages include 3 notification messages, one of the target notification messages with the highest priority is displayed in a first message notification bar, one of the target notification messages with the second-highest priority is displayed in a second message notification bar, and one of the target notification messages with the lowest priority is displayed in a third message notification bar, so that the user can conveniently find and view important notification messages with a high priority that he/she is concerned about.

The display permission of the to-be-processed notification message may be set by the user. In setting the display permission of the notification message, the user may indirectly set the display permission of the notification message by setting the display permission of notification messages of the corresponding application.

In the message display method provided in the present disclosure, when the electronic device is in a folded state, to-be-processed notification messages are obtained, then a target notification message(s) is determined from the to-be-processed notification messages based on the priorities of the to-be-processed notification messages, and the target notification message(s) is displayed on the first screen. With this method, on the external screen of an electronic device with a foldable screen, the target notification message(s) is determined from the to-be-processed notification messages based on the priorities of the to-be-processed notification messages, and the target notification message(s) is displayed on the first screen, so that the user can conveniently find and view important notification messages with a higher priority that he/she is concerned about, thereby improving the user experience.

As illustrated in FIG. 10, a message display method is provided in the embodiments of the present disclosure. The method is applied to an electronic device, and the electronic device includes a foldable device body, a first screen, and a second screen. The first screen and the second screen are arranged on opposite sides of the device body. The second screen is capable of being folded along with the device body. When the device body is in a folded state, the second screen is located on an inner side of the device body. The method includes operations S210-S220 as follows.

At S210, when the electronic device is in the folded state, to-be-processed notification messages are obtained in response to receiving a notification message. The to-be-processed notification messages include the received notification message, and a historic notification message that was received in the past but has not yet been processed.

In the embodiments of the present disclosure, the historic notification message that was received in the past but has not yet been processed may include an unprocessed notification message originally displayed in the second display interface of the first screen, and may also include an unprocessed notification message originally displayed in a message notification center of the second screen.

When the electronic device is in the folded state, in response to receiving a notification message, the electronic device may obtain all to-be-processed notification messages.

In a case where the device state of the electronic device is switched into the folded state from other states, the to-be-processed notification messages may include an unprocessed notification message(s) originally displayed in the message notification center of the second screen.

At S220, a target notification message(s) is determined from the to-be-processed notification messages based on the priorities of the to-be-processed notification messages, and the target notification message(s) is displayed on the first screen.

In the embodiments of the present disclosure, in the case where the device state of the electronic device is switched into the folded state from other states, the obtained to-be-processed notification messages may include an unprocessed notification message(s) originally displayed in the message notification center of the second screen. In this case, it is notable that the display priority of a notification message in the first screen may be different from the display priority of the notification message in the second screen. Therefore, in this case, the display priority of each unprocessed notification message originally displayed in the message notification center of the second screen needs to be converted into the display priority thereof in the first screen, that is, a first priority is converted into a second priority. The first priority is the display priority of the notification message in the second screen, and the second priority is the display priority of the notification message in the first screen.

After the priority of each unprocessed notification message originally displayed in the message notification center of the second screen is converted into the second priority, a preset number of target notification messages are determined from the to-be-processed notification messages based on the priority of each to-be-processed notification message in the first screen, and the target notification messages are displayed in the first display interface of the first screen in a certain order and display manner.

In the embodiments of the present disclosure, the preset number may be set to 2. Exemplarily, as illustrated in FIG. 9 which schematically shows displaying of target notification messages in the first display interface of the first screen, two target notification messages may be displayed in the first display interface 10 of the first screen 102 or 202. The two target notification messages may be two notification messages with a relatively high priority among the to-be-processed notification messages.

In the message display method provided in the present disclosure, when the electronic device is in the folded state, to-be-processed notification messages are obtained in response to receiving a notification message, the to-be-processed notification messages include the received notification message and a historic notification message that was received in the past but has not yet been processed. A target notification message(s) is determined from the to-be-processed notification messages based on the priorities of the to-be-processed notification messages, and the target notification message(s) is displayed on the first screen. With this method, the user can conveniently find and view important notification messages with a high priority that he/she is concerned about, thereby improving the user experience.

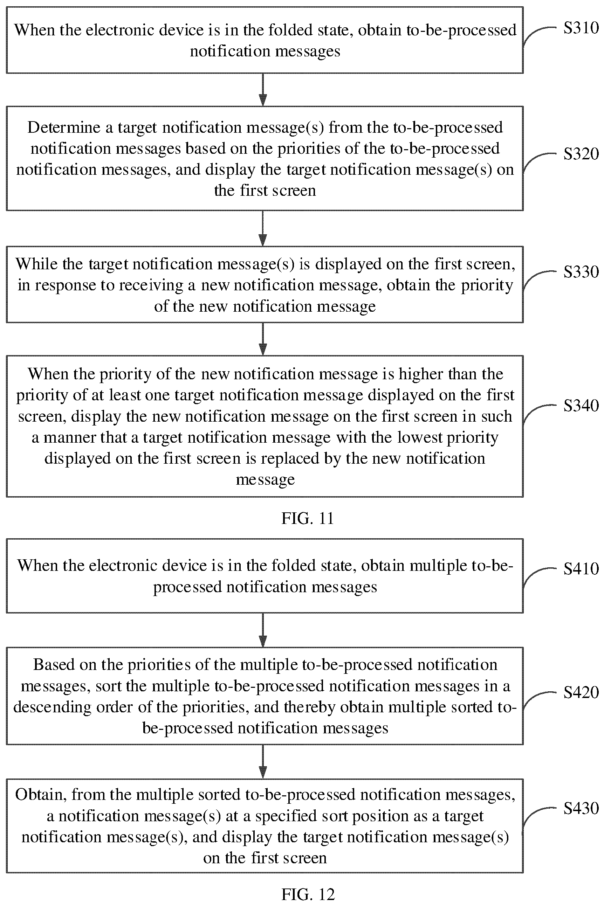

As illustrated in FIG. 11, a message display method is provided in the embodiments of the present disclosure. The method is applied to an electronic device, and the electronic device includes a foldable device body, a first screen, and a second screen. The first screen and the second screen are arranged on opposite sides of the device body. The second screen is capable of being folded along with the device body. When the device body is in a folded state, the second screen is located on an inner side of the device body. The method includes operations S310-S340 as follows.

At S310, when the electronic device is in the folded state, to-be-processed notification messages are obtained.

At S320, a target notification message(s) is determined from the to-be-processed notification messages based on the priorities of the to-be-processed notification messages, and the target notification message(s) is displayed on the first screen.

At S330, while the target notification message(s) is displayed on the first screen, in response to receiving a new notification message, the priority of the new notification message is obtained.

In the embodiments of the present disclosure, in a case where a preset number of target notification messages have been displayed in the first display interface of the first screen, when the electronic device further receives a new notification message, the electronic device may first obtain the priority of the new notification message.

In obtaining the priority of the new notification message, the priority of an application to which the new notification message belongs may be obtained first, and then the priority of the new notification message may be determined. In determining the priority of the new notification message, it may be determined based on an application to which the new notification message belongs, or based on a usage frequency of the application to which the new notification message belongs within a preset time period, or based on a usage duration of the application to which the new notification message belongs within a preset time period, or based on a receiving time at which the new notification message is received.

At S340, when the priority of the new notification message is higher than the priority of at least one target notification message displayed on the first screen, the new notification message is displayed on the first screen in such a manner that a target notification message with the lowest priority displayed on the first screen is replaced by the new notification message.

In the embodiments of the present disclosure, after the priority of the new notification message is determined, the priority of the new notification message is compared with the priorities of the target notification message(s) displayed in the first display interface of the first screen. If the priority of the new notification message is higher than the priority of any target notification message displayed in the first display interface of the first screen, a target notification message with the lowest priority displayed in the first display interface of the first screen is replaced by the new notification message, and the new notification message is displayed.

In the message display method provided in the present disclosure, first, when the electronic device is in a folded state, to-be-processed notification messages are obtained, a target notification message(s) is determined from the to-be-processed notification messages based on the priorities of the to-be-processed notification messages, and the target notification message(s) is displayed on a first screen. Then, while the target notification message(s) is displayed on the first screen, in response to receiving a new notification message, the priority of the new notification message is obtained; and when the priority of the new notification message is higher than the priority of at least one target notification message displayed on the first screen, the new notification message is displayed on the first screen in such a manner that a target notification message with the lowest priority displayed on the first screen is replaced by the new notification message. With this method, what displayed on the first screen are always notification messages with a relatively high priority, thereby improving the user experience. Furthermore, when a notification message with a higher priority is received, a target notification message with a lower priority displayed in the first screen would be transferred to the notification center, to ensure that the target notification messages displayed on the first screen are not too crowded.

As illustrated in FIG. 12, a message display method is provided in the embodiments of the present disclosure. The method is applied to an electronic device, and the electronic device includes a foldable device body, a first screen, and a second screen. The first screen and the second screen are arranged on opposite sides of the device body. The second screen is capable of being folded along with the device body. When the device body is in a folded state, the second screen is located on an inner side of the device body. The method includes operations S410-S430 as follows.

At S410, when the electronic device is in the folded state, multiple to-be-processed notification messages are obtained.

In the embodiments of the present disclosure, the to-be-processed notification messages may include at least one to-be-processed notification message. When there is only one to-be-processed notification message, the notification message may be directly displayed in the first display interface of the first screen. Furthermore, it may also be determined, based on the display permission of the notification message, whether to display the notification message in the first display interface of the first screen.

If the number of the to-be-processed notification messages is more than one, the multiple to-be-processed notification messages may be directly obtained.

At S420, based on the priorities of the multiple to-be-processed notification messages, the multiple to-be-processed notification messages are sorted in a descending order of the priorities, and multiple sorted to-be-processed notification messages are thereby obtained.

In the embodiments of the present disclosure, after multiple to-be-processed notification messages are obtained, the priority of each to-be-processed notification message is determined based on an application to which each to-be-processed notification message belongs, or the priority of each to-be-processed notification message may be determined based on the usage frequency of the application to which each to-be-processed notification message belongs within a preset time period, or the priority of each to-be-processed notification message may also be determined based on the receiving time at which each to-be-processed notification message is received.

After the priority of each to-be-processed notification message is determined based on the aforementioned approaches, the multiple to-be-processed notification messages may be sorted in a certain order based on the priorities, to obtain multiple sorted to-be-processed notification messages. The multiple to-be-processed notification messages being sorted in the certain order may mean that they are sorted in order of the priorities from high to low, or that they are sorted in order of the priorities from low to high, which is not specifically limited here.

At S430, a notification message(s) at a specified sort position is obtained as a target notification message(s) from the multiple sorted to-be-processed notification messages, and the target notification message(s) is displayed on the first screen.

In the embodiments of the present disclosure, the specified sort position is a preset priority sort position of a to-be-processed notification message(s) that needs to be displayed in the first display interface of the first screen. For example, the specified sort position may be set to the top two. With regard to obtaining a notification message(s) at the specified sort position as a target message(s), it may be understood that a notification message(s) with a high priority is obtained as a target notification message(s).

It is notable that, after a target notification message is displayed in the first display interface of the first screen, if it is detected that the user processes the target notification message displayed in the first display interface of the first screen, the processed target notification message will no longer be displayed in the first display interface of the first screen. In this case, if no new notification message is received, a to-be-processed notification message with the highest priority in the second display interface of the first screen may be obtained as a new target notification message, and the determined new target notification message may be displayed in the first display interface of the first screen.

In the message display method provided in the present disclosure, when the electronic device is in a folded state, multiple to-be-processed notification messages are obtained, and the multiple to-be-processed notification messages are sorted in a descending order of priority based on the priorities of the multiple to-be-processed notification messages to obtain multiple sorted to-be-processed notification messages. Then, a notification message(s) at a specified sort position is obtained as a target notification message(s) from the multiple sorted to-be-processed notification messages, and the target notification message(s) is displayed on the first screen. With this method, the user can conveniently find and view important notification messages with a high priority that he/she is concerned about, thereby improving the user experience.

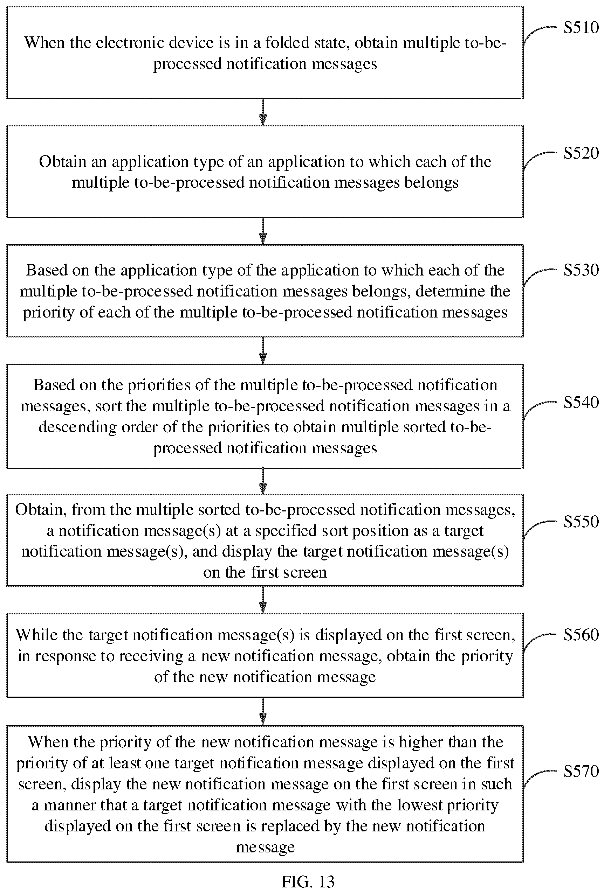

As illustrated in FIG. 13, a message display method is provided in the embodiments of the present disclosure. The method is applied to an electronic device, and the electronic device includes a foldable device body, a first screen, and a second screen. The first screen and the second screen are arranged on opposite sides of the device body. The second screen is capable of being folded along with the device body. When the device body is in a folded state, the second screen is located on an inner side of the device body. The method includes operations S510-S570 as follows.

At S510, when the electronic device is in a folded state, multiple to-be-processed notification messages are obtained.

At S520, an application type of an application to which each of the multiple to-be-processed notification messages belongs is obtained.

In the embodiments of the present disclosure, the application type includes a type of system task application, a type of application supporting a flashback key, and a type of chat application. The type of system task application has a higher priority than the type of application supporting a flashback key, and the type of application supporting a flashback key has a higher priority than the type of chat application. The flashback key is configured to, when being triggered, cause a user interface of the application supporting the flashback key to be displayed. The type of system task application includes system applications that come with the electronic device, for example a call application and a recording application. The type of application supporting a flashback key includes applications for each of which the electronic device generates and display a flashback key when the running state of this application is switched from a foreground running state to a background running state, such as a navigation application, a food delivery application, and a taxi application. The type of chat application includes applications each being configured for chatting, for example WeChat and QQ.

It is notable that, when the running state of an application is switched from the foreground running state to the background running state, the electronic device generates and displays a flashback key for the application, where the flashback key is configured to, when being triggered, cause the user interface of the application to be displayed. Optionally, the flashback key is displayed at the topmost layer on the display interface of the second screen of the electronic device.

Information on an application running in the background of the electronic device is not displayed on the display interface of the second screen of the electronic device. In order to expose key information of the application running in the background, in some implementations, when the electronic device detects that the running state of the application is switched from the foreground running state to the background running state, the electronic device calls the application programming interface (API) of the application to obtain the key information of the application, and displays the key information of the application on the flashback key. Also, the flashback key is displayed on the electronic device. In this way, the user can obtain the key information of the application running in the background through the displayed flashback key.

In the embodiments of the present disclosure, the obtaining the application type corresponding to each of the multiple to-be-processed notification messages actually refers to determining the application to which each to-be-processed notification message belongs.

As an implementation, different priorities may be set in advance for different application types. After the application to which each to-be-processed notification message belongs is obtained, the priority of each to-be-processed notification message may be determined.

At S530, based on the application type of the application to which each of the multiple to-be-processed notification messages belongs, the priority of each of the multiple to-be-processed notification messages is determined.

At S540, based on the priorities of the multiple to-be-processed notification messages, the multiple to-be-processed notification messages are sorted in a descending order of the priorities to obtain multiple sorted to-be-processed notification messages.

At S550, a notification message(s) at a specified sort position are obtained as a target notification message(s) from the multiple sorted to-be-processed notification messages, and the target notification message(s) is displayed on the first screen.

At S560, while the target notification message(s) is displayed on the first screen, in response to receiving a new notification message, the priority of the new notification message is obtained.

At S570, when the priority of the new notification message is higher than the priority of at least one target notification message displayed on the first screen, the new notification message is displayed on the first screen in such a manner that a target notification message with the lowest priority displayed on the first screen is replaced by the new notification message.

In the message display method provided in the present disclosure, first, when the electronic device is in a folded state, multiple to-be-processed notification messages are obtained, and the application type of an application to which each of the multiple to-be-processed notification messages belongs is obtained. Then, based on the application type of the application to which each of the multiple to-be-processed notification messages belongs, the priority of each of the multiple to-be-processed notification messages is determined. Then, based on the priorities of the multiple to-be-processed notification messages, the multiple to-be-processed notification messages are sorted in order of the priorities from high to low to obtain multiple sorted to-be-processed notification messages. From the multiple sorted to-be-processed notification messages, notification messages at a specified sort position are obtained as target notification messages, and the target notification messages are displayed on the first screen. While the target notification messages are displayed on the first screen, if a new notification message is received, the priority of the new notification message is obtained. If the priority of the new notification message is higher than the priority of at least one target notification message displayed on the first screen, the new notification message is displayed on the first screen. With this method, the user can conveniently find and view important notification messages with a high priority that he/she is concerned about, thereby improving the user experience.

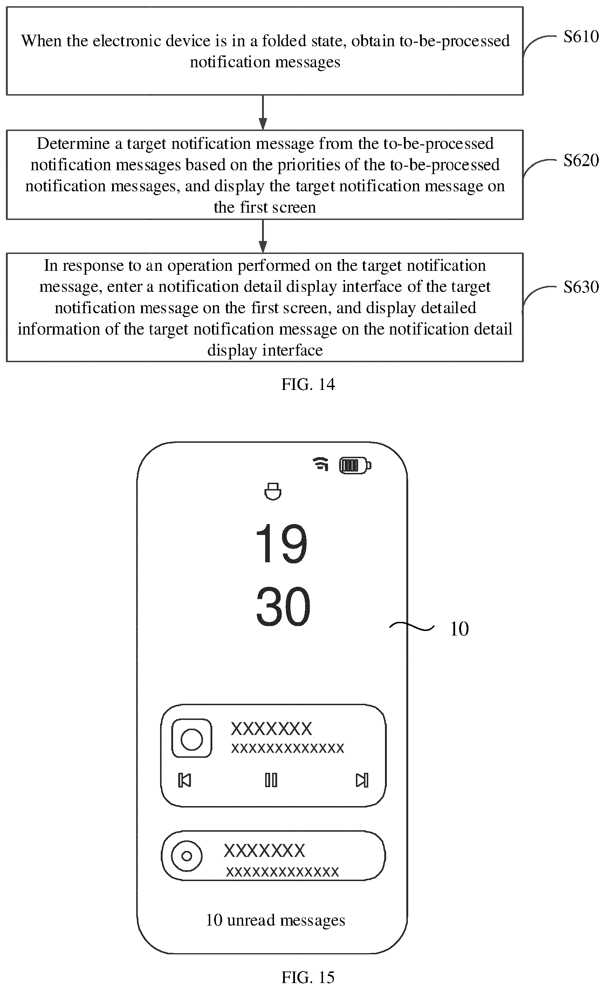

As illustrated in FIG. 14, a message display method is provided in the embodiments of the present disclosure. The method is applied to an electronic device, and the electronic device includes a foldable device body, a first screen, and a second screen. The first screen and the second screen are arranged on opposite sides of the device body. The second screen is capable of being folded along with the device body. When the device body is in a folded state, the second screen is located on an inner side of the device body. The method includes operations S610-S630 as follows.

At S610, when the electronic device is in a folded state, to-be-processed notification messages are obtained.

If the number of the to-be-processed notification messages is greater than a preset number, a prompt message is displayed on the first screen. The preset number is a maximum number of target notification messages that can be displayed on the first screen. The prompt message is configured to prompt viewing of all the to-be-processed notification messages.

In the embodiments of the present disclosure, when the number of the to-be-processed notification messages obtained is greater than the maximum number of notification messages that can be displayed in the first display interface of the first screen, a prompt message is displayed in the first display interface of the first screen to allow the user to view more to-be-processed notification messages through a preset operation.

Exemplarily, FIG. 15 schematically illustrates a prompt message displayed in the first display interface of the first screen. As illustrated in FIG. 15, a prompt message "10 unread messages" is displayed at the bottom of the first display interface 10 to prompt the user that there are still 10 notification messages that are not displayed in the first display interface.

When a first operation performed on the first display interface is detected, in response to the first operation, a second display interface is entered on the first screen, and the second display interface is configured to display the to-be-processed notification messages that are previously not displayed.

The first operation may be a sliding operation or a click operation performed on the first display interface, which is not specifically limited here.

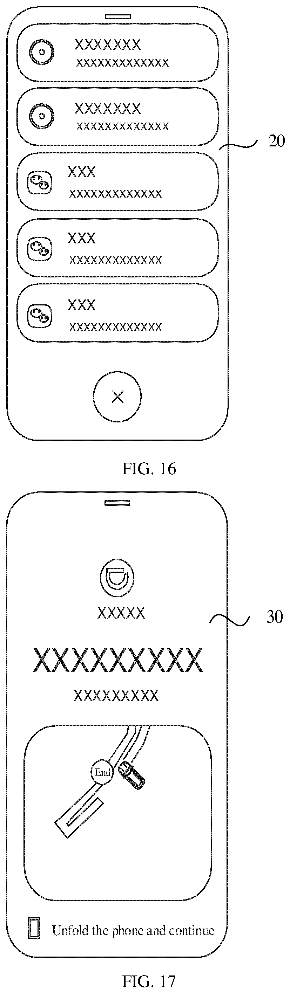

Exemplarily, FIG. 16 schematically illustrates the second display interface. When the first operation performed on the first display interface of FIG. 15 is detected, the second display interface 20 as illustrated in FIG. 16 is entered to display the to-be-processed notification messages that are previously not displayed.

At S620, a target notification message is determined from the to-be-processed notification messages based on the priorities of the to-be-processed notification messages, and the target notification message is displayed on the first screen.

At S630, in response to an operation performed on the target notification message, a notification detail display interface of the target notification message is entered on the first screen, and detailed information of the target notification message is displayed on the notification detail display interface.

In the embodiments of the present disclosure, the operation performed on the target notification message may be a click operation or a sliding operation, which is not specifically limited here.

As an implementation, by means of an operation performed on a target notification message, a notification detail display interface of the target notification message may be entered, and a more complete target notification message may be displayed on the notification detail display interface. Exemplarily, FIG. 17 schematically illustrates a notification detail display interface 30. After the target notification message in FIG. 15 is clicked, the notification detail display interface 30 as illustrated in FIG. 17 is entered. More information of the target notification message may be displayed in the notification detail display interface 30. For example, if the target notification message is a navigation message, in the notification detail display interface 30, a starting position and an end position of the navigation may be displayed, and road information of the vehicle during the driving process or the like may also be displayed. Similarly, if an operation performed on a notification message displayed in the second display interface as illustrated in FIG. 16 is detected, in response to the operation, the notification detail display interface of the notification message may also be entered.

Furthermore, after the notification detail display interface of the target notification message is entered, if the application corresponding to the target notification message needs to be entered, the user may directly unfold the electronic device to convert the device state of the electronic device from the folded state into the unfolded state. When it is detected that the electronic device is switched from the folded state into the unfolded state, the application corresponding to the target notification message is entered.

Optionally, if the target notification message is a chat message, when an operation performed on the target notification message is detected, a reply interface for the target notification message may be entered, and the target notification message may be replied to through the reply interface.

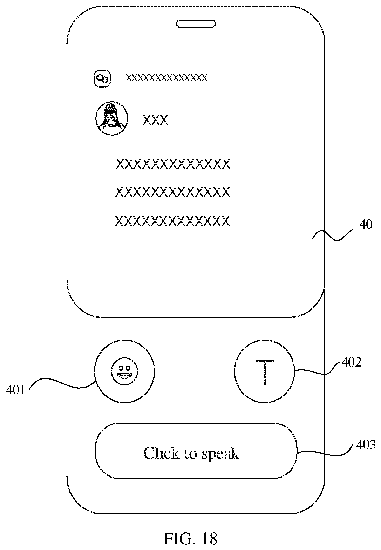

Exemplarily, FIG. 18 schematically illustrate a reply interface 40. The reply interface 40 may include a reply control. The reply control is a preset control configured to trigger entry into a quick reply interface for quickly replying to the target notification message. The reply control may include multiple controls, for example, an emoji reply control 401, a phrase reply control 402, and a speech-to-text reply control 403. The emoji reply control is displayed as an emoji image in the reply interface. The phrase reply control is displayed as "T" in the reply interface. The speech-to-text reply control is displayed as a prompt "click to speak" in the reply interface. In FIG. 18, the emoji reply control and the phrase reply control are provided at a same horizontal position, and the speech-to-text reply control is provided below the emoji reply control and the phrase reply control. Optionally, the emoji reply control, the phrase reply control and the speech-to-text reply control may also be provided at other positions, which is not limited here. The size of the reply control may be set to any size, and it is not specifically limited here.

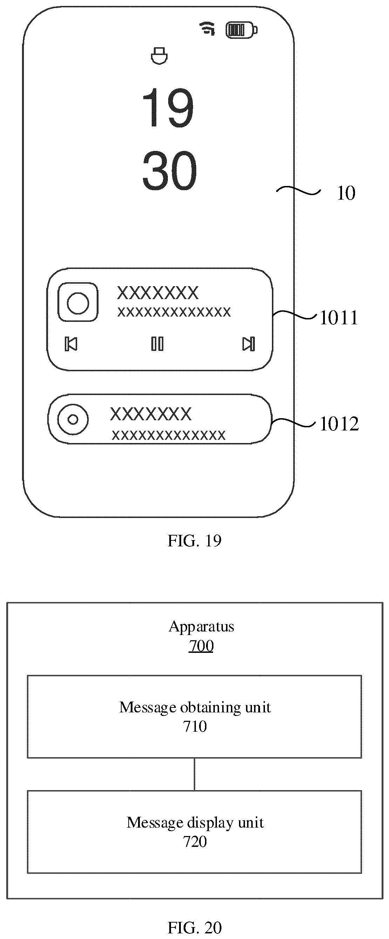

Optionally, when the electronic device is in the folded state, if a music playback application in the electronic device is still running, a notification message of the music playback application is directly displayed in the first display interface of the first screen. In this case, the number of the target notification messages that can be displayed in the first display interface is reduced by one. As illustrated in FIG. 19, when the music playback application 1011 is running, if the electronic device is in a folded state at this time, and if the maximum number of target notification messages that can be displayed on the first display interface 10 is 2, then only one target notification message 1012 may be displayed in the first display interface 10 in this case.

In the message display method provided in the present disclosure, when the electronic device is in a folded state, to-be-processed notification messages are obtained, a target notification message is determined from the to-be-processed notification messages based on the priorities of the to-be-processed notification messages, and the target notification message is displayed on the first screen. In response to an operation performed on the target notification message, a notification detail display interface of the target notification message is entered on the first screen, and detailed information of the target notification message is displayed on the notification detail display interface. With this method, the user can directly view the detailed information of the target notification message on the first screen, thereby improving the user experience.

As illustrated in FIG. 20, a message display apparatus 700 is provided in the embodiments of the present disclosure. The message display apparatus runs on an electronic device. The electronic device includes a foldable device body, a first screen, and a second screen. The first screen and the second screen are arranged on opposite sides of the device body. The second screen is capable of being folded along with the device body. When the device body is in a folded state, the second screen is located on an inner side of the device body. The apparatus 700 includes a message obtaining unit 710 and a message display unit 720.

The message obtaining unit 710 is configured to obtain to-be-processed notification messages when the electronic device is in a folded state.

As an implementation, the message acquisition unit 710 is specifically configured to obtain the to-be-processed notification messages in response to receiving a notification message, when the electronic device is in the folded state, the to-be-processed notification messages include the received notification message and a historic notification message that was received in the past but has not yet been processed.

The message display unit 720 is configured to determine a target notification message(s) from the to-be-processed notification messages based on the priorities of the to-be-processed notification messages, and display the target notification message(s) on the first screen.

As an implementation, the message display unit 720 is specifically configured to, while the target notification message(s) is displayed on the first screen, obtain the priority of a new notification message in response to receiving the new notification message; and when the priority of the new notification message is higher than the priority of at least one target notification message displayed on the first screen, display the new notification message on the first screen in such a manner that a target notification message with the lowest priority displayed on the first screen is replaced by the new notification message.

As another implementation, there are multiple to-be-processed notification messages, and the message display unit 720 is specifically configured to sort, based on the priorities of the multiple to-be-processed notification messages, the multiple to-be-processed notification messages in order of the priorities from high to low, and obtain multiple sorted to-be-processed notification messages; and obtain, from the multiple sorted to-be-processed notification messages, a notification message(s) at a specified sort position as the target notification message(s).

Optionally, the message display unit 720 is further configured to: obtain the application type of an application to which each of the multiple to-be-processed notification messages belongs; and determine, based on the application type of the application to which each of the multiple to-be-processed notification messages belongs, the priority of each of the multiple to-be-processed notification messages. The application type includes a type of system task application, a type of application supporting a flashback key, and a type of chat application. The type of system task application has a higher priority than the type of application supporting a flashback key, and the type of application supporting a flashback key has a higher priority than the type of chat application. The flashback key is configured to, when being triggered, cause a display user interface of the application to be displayed.

Optionally, the message display unit 720 is further configured to, in response to an operation performed on the target notification message, cause a notification detail display interface of the target notification message to be entered on the first screen, and display detailed information of the target notification message on the notification detail display interface.

Optionally, the message display unit 720 is further configured to display a prompt message on the first screen when the number of the to-be-processed notification messages is greater than a preset number, where the preset number is a maximum number of target notification messages that can be displayed on the first screen, and the prompt message is configured to prompt viewing of all the to-be-processed notification messages.

Optionally, the message display unit 720 is further configured to obtain the usage frequency of the application to which each of the multiple to-be-processed notification messages belongs within a preset time period, and determine the priority of each of the multiple to-be-processed notification messages based on the respective usage frequency.

Optionally, the message display unit 720 is further configured to obtain the usage duration of the application to which each of the multiple to-be-processed notification messages belongs within a preset time period, and determine the priority of each of the multiple to-be-processed notification messages based on the respective usage duration.

Optionally, the message display unit 720 is further configured to obtain the receiving time of each of the multiple to-be-processed notification messages, and determine the priority of each of the multiple to-be-processed notification messages based on the respective receiving time.

Optionally, the message display unit 720 is further configured to cause an application corresponding to the target notification message to be entered, when it is detected that the electronic device is switched from the folded state into an unfolded state.

Optionally, the message display unit 720 is further configured to display, on the second display interface of the first screen, other to-be-processed notification messages than the determined target notification message(s) of the to-be-processed notification messages, when the number of the to-be-processed notification messages is greater than the preset number.

Optionally, the message display unit 720 is further configured to display, on the second display interface of the first screen, the other to-be-processed notification messages than the determined target notification message(s) of the to-be-processed notification messages based on the display priorities of the notification messages in the second screen.

Optionally, the message display unit 720 is further configured to, in response to a first operation performed on the first display interface of the first screen, cause the second display interface to be entered on the first screen.

Optionally, the message display unit 720 is further configured to display the target notification message(s) on the first display interface of the first screen, where the first display interface includes at least one message notification bar, and each message notification bar is configured to display one notification message.

Optionally, the message display unit 720 is further configured to determine, based on the display permissions of the to-be-processed notification messages and the priorities of the to-be-processed notification messages, the target notification message(s) from the to-be-processed notification messages, and display the target notification message(s) on the first display interface of the first screen.

It is notable that the apparatus embodiment in the present disclosure corresponds to the aforementioned method embodiments. For the specific principles of the apparatus embodiment, reference may be made to the contents of the aforementioned method embodiments, which will not be repeated here.

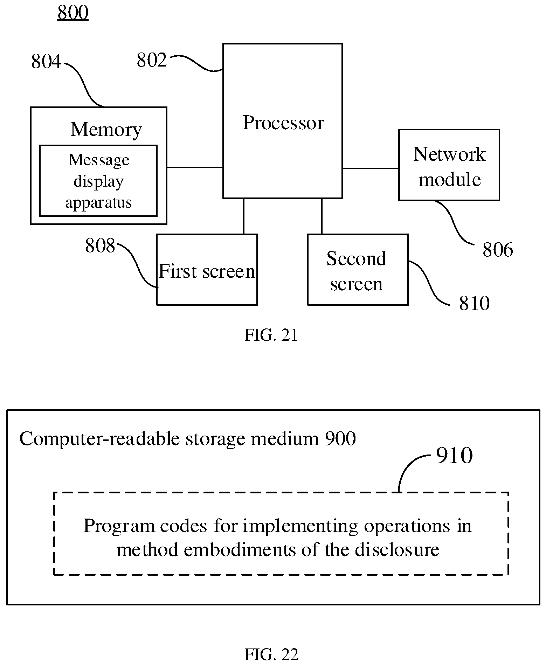

An electronic device or server as provided in the present disclosure will be described below in conjunction with FIG. 21.

As illustrated in FIG. 21, based on the above-mentioned message display methods and apparatus, the embodiments of the present disclosure further provide another electronic device 800 that can execute the above-mentioned message display methods. The electronic device 800 includes one or more (only one is shown in FIG. 21) processors 802, a memory 804, a network module 806, a first screen 808, and a second screen 810 that are coupled to each other. The memory 804 stores a program that may execute the contents of the aforementioned embodiments, and the processor 802 may execute the program stored in the memory 804.

The processor 802 may include one or more processing cores. The processor 802 uses various interfaces and lines to connect various parts within the entire electronic device 800. The processor 802 performs various functions of the electronic device 800 and processes data by running or executing instructions, programs, code sets or instruction sets stored in the memory 804, and calling data stored in the memory 804. Optionally, the processor 802 may be implemented in at least one hardware of digital signal processing (DSP), field-programmable gate array (FPGA), and programmable logic array (PLA). The processor 802 may integrate one or a combination of a central processing unit (CPU), a graphics processing unit (GPU), a modem, and the like. The CPU mainly processes the operating system, user interface, and applications. The GPU is responsible for rendering and drawing display content. The modem is configured to handle wireless communications. It is understandable that the modem may not be integrated into the processor 802, but may be implemented separately through a communication chip.

The memory 804 may include a random access memory (RAM) or a read-only memory (ROM). The memory 804 may be configured to store instructions, programs, codes, code sets, or instruction sets. The memory 804 may include a program storage area and a data storage area. The program storage area may store instructions for implementing an operating system, instructions for implementing at least one function (such as a touch function, a sound playback function, and an image playback function), instructions for implementing the following method embodiments, etc. For example, the memory 804 may store the message display apparatus. The message display apparatus may be the aforementioned apparatus 700. The data storage area may further store data created by the electronic device 800 during use (such as a phone book, audio and video data, and chat record data).

The network module 806 is configured to receive and send electromagnetic waves, and realize the mutual conversion between electromagnetic waves and electrical signals, so as to communicate with a communication network or other devices such as an audio playback device. The network module 806 may include various existing circuit elements for performing these functions, such as an antenna, a radio frequency transceiver, a digital signal processor, an encryption/decryption chip, a subscriber identity module (SIM) card, a memory, and the like. The network module 806 may communicate with various networks such as the Internet, a corporate intranet, and a wireless network, or communicate with other devices through a wireless network. The wireless network may include a cellular telephone network, a wireless local area network or a metropolitan area network. For example, the network module 806 may exchange information with a base station.

The first screen 808 and the second screen 810 may be configured for interface display. The first screen 808 and the second screen 810 are provided on opposite sides of the device body. The first screen 808 can be folded along with the device body. When the device body is in a folded state, the first screen 808 is located on the inner side of the device body.

As illustrated in FIG. 22, a structural block diagram of a computer-readable storage medium provided in the embodiments of the present disclosure is shown. The computer-readable storage medium 900 stores program codes which may be called by a processor to execute the methods described in the above method embodiments.

The computer-readable storage medium 900 may be an electronic memory such as a flash memory, an Electrically Erasable Programmable Read Only Memory (EEPROM), an EPROM, a hard disk, or a ROM. Optionally, the computer-readable storage medium 900 includes a non-transitory computer-readable storage medium. The computer-readable storage medium 900 has a storage space for program codes 910 for executing any method operations in the above-described methods. The program codes may be read from or written into one or more computer program products. The program codes 910 may be compressed, for example, in a suitable form.

In the message display method and apparatus, the electronic device and the storage medium provided in the present disclosure, when the electronic device is in a folded state, to-be-processed notification messages are obtained, a target notification message(s) is determined from the to-be-processed notification messages based on the priorities of the to-be-processed notification messages, and the target notification message(s) is displayed on a first screen. With this method, in the external screen of an electronic device with a foldable screen, the target notification message(s) is determined from the to-be-processed notification messages based on the priorities of the to-be-processed notification messages, and the target notification message(s) is displayed on the first screen. In this way, the user can conveniently find and view important notification messages with a high priority that he/she is concerned about, thereby improving the user experience.

The embodiments of the present disclosure are described above in conjunction with the drawings, but the present disclosure is not limited to the above-mentioned specific implementations which are merely illustrative rather than restrictive. Under the suggestion of the present disclosure, those of ordinary skill in the art can also make many variations without departing from the spirit of the present disclosure and the scope of protection of the claims. All of such variations are within the protection of the present disclosure.

## Claims

1. A message display method, for an electronic device, wherein the electronic device comprises a foldable device body, a first screen and a second screen, the first screen and the second screen are provided on opposite sides of the device body, the second screen is capable of being folded along with the device body; when the device body is in a folded state, the second screen is located on an inner side of the device body; the method comprises:
obtaining to-be-processed notification messages in a folded state of the electronic device; and
determining, based on priorities of the to-be-processed notification messages, a target notification message from the to-be-processed notification messages, and displaying the target notification message on the first screen.

2. The method as claimed in claim 1, wherein the obtaining to-be-processed notification messages in a folded state of the electronic device, comprises:
in the folded state of the electronic device, obtaining the to-be-processed notification messages in response to receiving a notification message, wherein the to-be-processed notification messages comprise the received notification message and a historic notification message that was received in past but has not yet been processed.

3. The method as claimed in claim 2, wherein the method further comprises:
while the target notification message is displayed on the first screen, in response to receiving a new notification message, obtaining a priority of the new notification message; and
in response to the priority of the new notification message being higher than the priority of at least one target notification message displayed on the first screen, displaying the new notification message on the first screen in such a manner that a target notification message with a lowest priority displayed on the first screen is replaced by the new notification message.

4. The method as claimed in claim 1, wherein the to-be-processed notification messages comprise multiple to-be-processed notification messages, and the determining, based on priorities of the to-be-processed notification messages, a target notification message from the to-be-processed notification messages, comprises:
sorting, based on the priorities of the multiple to-be-processed notification messages, the multiple to-be-processed notification messages in a descending order of the priorities, and obtaining multiple sorted to-be-processed notification messages; and
obtaining, from the multiple sorted to-be-processed notification messages, a notification message at a specified sort position as the target notification message.

5. The method as claimed in claim 4, wherein before the target notification message is determined from the to-be-processed notification messages based on the priorities of the to-be-processed notification messages, the method further comprises:
obtaining an application type of an application to which each of the multiple to-be-processed notification messages belongs; and
determining, based on the application type of the application to which each of the multiple to-be-processed notification messages belongs, the priority of each of the multiple to-be-processed notification messages.

6. The method as claimed in claim 4, wherein before the target notification message is determined from the to-be-processed notification messages based on the priorities of the to-be-processed notification messages, the method further comprises:
obtaining a usage frequency of an application to which each of the multiple to-be-processed notification messages belongs within a preset time period; and
determining, based on the respective usage frequency, the priority of each of the multiple to-be-processed notification messages.

7. The method as claimed in claim 4, wherein before the target notification message is determined from the to-be-processed notification messages based on the priorities of the to-be-processed notification messages, the method further comprises:
obtaining a usage duration of an application to which each of the multiple to-be-processed notification messages belongs within a preset time period; and
determining, based on the respective usage duration, the priority of each of the multiple to-be-processed notification messages.

8. The method as claimed in claim 4, wherein before the target notification message is determined from the to-be-processed notification messages based on the priorities of the to-be-processed notification messages, the method further comprises:
obtaining, a receiving time at which each of the multiple to-be-processed notification messages is received; and
determining, based on the respective receiving time, the priority of each of the multiple to-be-processed notification messages.

9. The method as claimed in claim 5, wherein the application type comprises a type of system task application, a type of application supporting a flashback key, and a type of chat application, the type of system task application has a higher priority than the type of application supporting a flashback key, and the type of application supporting a flashback key has a higher priority than the type of chat application; the flashback key is configured to, when being triggered, cause a user interface of the application to be displayed.

10. The method as claimed in claim 1, wherein after the target notification message is displayed on the first screen, the method further comprises:
in response to an operation performed on the target notification message, entering a notification detail display interface for the target notification message on the first screen, and displaying detailed information of the target notification message on the notification detail display interface.

11. The method as claimed in claim 10, wherein after the notification detail display interface for the target notification message is entered on the first screen, the method further comprises:
in response to detecting that the electronic device being switched from the folded state into an unfolded state, entering an application to which the target notification message belongs.

12. The method as claimed in claim 2, wherein the method further comprises:
in response to the number of the to-be-processed notification messages being greater than a preset number, displaying a prompt message on the first screen, wherein the preset number is a maximum number of target notification messages capable of being displayed on the first screen, and the prompt message is configured to prompt viewing of all the to-be-processed notification messages.

13. The method as claimed in claim 12, wherein the method further comprises:
in response to the number of the to-be-processed notification messages being greater than the preset number, displaying, on a second display interface of the first screen, other to-be-processed notification messages than the determined target notification message of the to-be-processed notification messages.

14. The method as claimed in claim 13, wherein the displaying, on a second display interface of the first screen, other to-be-processed notification messages than the determined target notification message of the to-be-processed notification messages, comprises:
displaying, on the second display interface of the first screen, the other to-be-processed notification messages than the determined target notification message of the to-be-processed notification messages, based on display priorities of the notification messages in the second screen.

15. The method as claimed in claim 13 or 14, wherein before the other to-be-processed notification messages than the determined target notification message of the to-be-processed notification messages are displayed on the second display interface of the first screen, the method further comprises:
in response to a first operation performed on a first display interface of the first screen, entering the second display interface on the first screen.

16. The method as claimed in any one of claims 1 to 15, wherein the displaying the target notification message on the first screen, comprises:
displaying the target notification message on a first display interface of the first screen, wherein the first display interface comprises at least one message notification bar, and each message notification bar is configured to display one notification message.

17. The method as claimed in any one of claims 1 to 16, wherein the determining, based on priorities of the to-be-processed notification messages, a target notification message from the to-be-processed notification messages and displaying the target notification message on the first screen, comprises:
determining, based on display permissions of the to-be-processed notification messages and the priorities of the to-be-processed notification messages, a target notification message from the to-be-processed notification messages, and displaying the target notification message on the first display interface of the first screen.

18. A message display apparatus, wherein the apparatus runs on an electronic device, the electronic device comprises a foldable device body, a first screen and a second screen, the first screen and the second screen are provided on opposite sides of the device body, and the first screen is capable of being folded along with the device body; and when the device body is in a folded state, the first screen is located on an inner side of the device body, and the apparatus comprises:
a message obtaining unit, configured to obtain to-be-processed notification messages in a folded state of the electronic device; and
a message display unit, configured to determine, based on priorities of the to-be-processed notification messages, a target notification message from the to-be-processed notification messages, and display the target notification message on the first screen.

19. An electronic device, comprising a foldable device body, a first screen, a second screen and one or more processors, wherein the first screen and the second screen are provided on two opposite sides of the device body, the second screen is capable of being folded along with the device body; when the device body is in a folded state, the second screen is located on an inner side of the device body; and one or more programs are stored in a memory and are configured to cause the one or more processors to execute the method as claimed in any one of claims 1 to 17.

20. A computer-readable storage medium having program codes stored thereon, wherein the program codes, when being executed by a processor, cause the method as claimed in any one of claims 1 to 17 to be implemented.
